# EUROPÄISCHE PATENTANMELDUNG

(11) **EP 2 198 717 A2**
(43) Veröffentlichungstag der Anmeldung: **23.06.2010**
(21) Anmeldenummer: 09179835.5
(22) Anmeldetag: 18.12.2009
(51) Int. Cl.: A22C 11/02

(54) **Vorrichtung zum Abfüllen bzw. Bearbeiten von pastösen Massen insbesondere Wurstbrät**

(30) Priorität: 18.12.2008 DE 202008016702 U
(71) Anmelder: VEMAG Maschinenbau GmbH, 27283 Verden/Aller (DE)
(72) Erfinder: Kiel, Tobias, 27283 Verden (DE); Nilsson, Kersten, 27283 Verden (DE)
(74) Vertreter: Sendrowski, Heiko

(57) **Zusammenfassung**

Die Erfindung betrifft eine Vorrichtung zum Bearbeiten und Abfüllen einer pastösen Masse wie Wurstbrät, insbesondere zur Kopplung mit einer Vorrichtung zum Abfüllen pastöser Masse, mit einem Gehäuse (12), welches einen Einlass (24) zum Einleiten der Masse und einen Auslass (26) zum Abgeben der Masse aufweist, sowie einem in das Gehäuse (12) einsetzbaren Einsatz (36), welcher dazu ausgebildet ist, durch das Gehäuse fließende Masse zu bearbeiten und/oder zu beeinflussen. Erfindungsgemäß ist, dass in dem Gehäuse (12) zwischen Einlass (24) und Auslass (26) eine Öffnung (30) ausgebildet ist, durch welche der Einsatz (36) in das Gehäuse (12) einsetzbar bzw. herausnehmbar ist und dass die Öffnung (30) mittels eines Verschlusses verschließbar ist.

## Beschreibung

Die vorliegende Erfindung betrifft eine Bearbeitungsvorrichtung nach dem Oberbegriff des Anspruchs 1 bzw. eine Füllmaschine zum Abfüllen pastöser Massen, insbesondere Wurstbrät, nach dem Oberbegriff des Anspruchs 11.

Füllmaschinen der eingangs genannten Art dienen zum Abfüllen pastöser Lebensmittelmassen in Verpackungen. So können mit Hilfe solcher Füllmaschinen Fleischprodukte wie Brühwurst, Hackfleisch, Würstchen oder andere Wurstprodukte in Hüllen aus Natur- oder Kunstdarm abgefüllt werden. Die Füllmaschine weist einen Fülltrichter zur Aufnahme der Masse, eine Förderpumpe und ein Rohr zum Abgeben der Masse auf. Der Füllmaschine nachgeschaltet sein können beispielsweise Clipper zum Abklemmen von Enden eines Wurstabschnitts, Füllstromteiler zum Aufteilen des Massenstroms in mehrere einzelne Massenströme oder andere sog. Vorsatzgeräte, die mit einer Füllmaschine gekoppelt werden können.

Ein Beispiel für eine Bearbeitungsvorrichtung der eingangs genannten Art ist eine Vorrichtung zum Verteilen von Gas, insbesondere Luftblasen, innerhalb eines Bräts, welches beispielsweise für die Brühwurstherstellung geeignet ist. Bei der Abfüllung von Brühwurstmassen kann es zu einer Agglomeration der im Brät vorhandenen Luft, d.h. zu einer Bildung von größeren Luftblasen innerhalb des Bräts kommen, die jedoch von dem Kunden in dem Wurstprodukt unerwünscht sind und nicht akzeptiert werden. Zur feinen Verteilung etwaiger in dem Brät befindlicher Luft weist eine bekannte, der Füllmaschine nachgeschaltete Bearbeitungsvorrichtung eine Düse auf, die in einem Rohr angeordnet ist. Die Düsen, die in etwa die Form eines zylindrischen Rohres mit einer Querschnittsverengung im Inneren haben, werden in ein im Wesentlichen rohrförmiges Gehäuse axial eingeschoben und innerhalb des Rohres fixiert. Durch die Querschnittsverengung innerhalb der Düse kommt es zu einer Zerkleinerung großer Luftblasen und dadurch zu einer feineren Verteilung von Luft innerhalb des Bräts. Das Rohr mit eingesetzter Düse wird mittels einer Schraubverbindung einerseits eingangsseitig mit dem Abgaberohr der Füllmaschine verbunden und andererseits ausgangsseitig mit einem nachgeschalteten Vorsatzgerät, beispielsweise einem Clipper verbunden.

Im Falle eines Produktwechsels ist regelmäßig auch die Düse zu wechseln. Die eingesetzte Düse muss in Abhängigkeit von der Produktart einen speziellen inneren Aufbau, insbesondere einen speziell angepassten Innendurchmesser, aufweisen. Dies ist erforderlich, um die sich einstellenden Strömungsverhältnisse an das Produkt anzupassen. So können beispielsweise im Wesentlichen feste Einlagen, wie Pilze oder dergleichen, in dem Brät vorhanden sein, die bei Einsatz einer nicht richtigen Düse beschädigt oder zerstört werden könnten. Der Einbau und Austausch ist verhältnismäßig aufwändig, da das komplette die Düse aufnehmende Rohr, welches beidseitig verschraubt ist, abgeschraubt werden muss. Dazu sind mehrere Schraubverbindungen zu lösen. Bei gelöstem Rohr wird eine neue Düse axial durch ein Rohrende eingeschoben. Anschließend wird das Rohr mit eingesetzter Düse wieder verschraubt. Der relativ hohe Aufwand zum Wechseln einer Düse wird von den Benutzern als nachteilig wahrgenommen.

Aufgabe der vorliegenden Erfindung ist es daher, eine Bearbeitungsvorrichtung und eine Füllvorrichtung bereitzustellen, die die im Stand der Technik vorhandenen Nachteile verringern und insbesondere eine rasche Anpassung an unterschiedliche Produkte ermöglichen. Insbesondere soll eine Bearbeitungs- bzw. Füllvorrichtung bereitgestellt werden, die einen vergleichsweise einfachen Austausch von Düsen, die von der Masse durchströmt werden, ermöglicht.

Die Erfindung löst die Aufgabe mit einer Bearbeitungsvorrichtung der eingangs genannten Art dadurch, dass in dem Gehäuse zwischen Einlass und Auslass eine Öffnung ausgebildet ist, durch welche der Einsatz in das Gehäuse einsetzbar bzw. herausnehmbar ist und dass die Öffnung mittels eines Verschlusses verschließbar ist (Anspruch 1).

Die Erfindung löst die Aufgabe ferner mit einer Füllvorrichtung der eingangs genannten Art, die mit einer erfindungsgemäßen Bearbeitungsvorrichtung verbunden ist (Anspruch 11).

Erfindungsgemäß lässt sich der Einsatz zum Bearbeiten der Masse einfach und mit geringem Zeitaufwand einsetzen, entnehmen und somit austauschen. Dies erfolgt durch die (zusätzliche) Öffnung in dem Gehäuse, durch die der Einsatz, beispielsweise eine Düse, ausgetauscht werden kann, ohne dass das gesamte Gehäuse abgeschraubt werden müsste, wie dies im Stand der Technik der Fall ist. Die Verbindung des Gehäuses zu einer Füllmaschine einerseits und zu nachgeschalteten Verarbeitungsgeräten (sogenannte Vorsatzgeräte) andererseits bleibt somit erfindungsgemäß bestehen bei einem Wechsel des Einsatzes. Dadurch entsteht ein erheblicher Zeit- und Kostenvorteil.

Eine besonders bevorzugte Ausführungsform der Erfindung weist eine Aufnahmevorrichtung zur Aufnahme des Einsatzes auf, welche zusammen mit dem Einsatz durch die Öffnung wenigstens teilweise in das Gehäuse einsetzbar ist, um den Einsatz innerhalb des Gehäuses zu positionieren. Durch eine solche den Einsatz aufnehmende Aufnahmevorrichtung lässt sich der Wechsel eines Einsatzes, bei dem es sich bevorzugt um eine Düse handelt, besonders einfach und rasch vornehmen, indem die komplette Aufnahmevorrichtung mit Einsatz (vorzugsweise Düse) herausgenommen bzw. eingesetzt wird. Gleichzeitig lässt sich die Aufnahmevorrichtung so gestallten, dass der Einsatz sicher an dieser positioniert ist und somit der Einsatz präzise innerhalb des in dem Gehäuse ausgebildeten Strömungskanals, durch welchen die pastöse Masse durchgefördert wird, positioniert wird, so dass die Strömung möglichst optimal verläuft, beispielsweise nur mit geringen Strömungswiderständen und nicht zu großen Scherkräften.

Eine Weiterbildung sieht vor, dass die Aufnahmevorrichtung einen im eingesetzten Zustand die Öffnung verschließenden Verschlussabschnitt und einen im eingesetzten Zustand in das Gehäuse hineinragenden Aufnahmeabschnitt aufweist, an welchem der Einsatz befestigbar ist. Verschlussabschnitt und Aufnahmeabschnitt können an einem einstückigen Bauteil, beispielsweise einem Dreh- und/oder Frästeil vorhanden sein oder aber auch miteinander verschweißt oder anderweitig aneinander befestigt sein.

Gemäß einer weiteren alternativen Ausführungsform wird vorgeschlagen, dass das Gehäuse im Wesentlichen die Form eines zylindrischen Rohres aufweist, welches an seinem einen Ende dauerhaft verschlossen ist und an seinem anderen Ende die Öffnung aufweist, und dass der Aufnahmeabschnitt der Aufnahmevorrichtung im Wesentlichen rohrförmig ist und zwei gegenüberliegende Durchgangsbohrungen aufweist, in welche der Einsatz einsetzbar ist, und dass der Verschlussabschnitt der Aufnahmevorrichtung als eine im Wesentlichen kreisförmige Verschlussplatte ausgebildet ist. Auf diese Weise ist die Vorrichtung herstellungstechnisch und strömungstechnisch optimiert und die Handhabung läßt sich zuverlässig bewerkstelligen.

Die Kopplung an eine Füllvorrichtung (Füllmaschine) einerseits und ein Vorschaltgerät, bei dem es sich beispielsweise um einen Clipper, Füllstromteiler oder dergleichen handeln kann, lässt sich dadurch vorteilhaft realisieren, dass an dem Gehäuse ein erster den Einlass aufweisender Rohrstutzen und ein zweiter den Auslass aufweisender Rohrstutzen angeordnet ist.

Gemäß einer weiteren bevorzugten Ausführungsform wird vorgeschlagen, dass die Aufnahmevorrichtung mittels eines Bajonettverschlusses oder Schraubverschlüssen an dem Gehäuse befestigbar ist, da so ein rasches Lösen bzw. Befestigen unterstützt wird.

Die Handhabung wird ferner dadurch verbessert, dass an der Verschlussplatte der Aufnahmevorrichtung mittig eine Sacklochbohrung ausgebildet ist, in welche ein Handhabungswerkzeug zum Herausziehen bzw. Einführen der Aufnahmevorrichtung formschlüssig einsetzbar ist. Das Handhabungswerkzeug kann beispielsweise ein T-förmiges Handstück sein, welches mit seinem freien Ende an der Aufnahmevorrichtung angreift.

Gemäß einer Weiterbildung wird vorgeschlagen, dass im Randbereich des Verschlussabschnittes Vorsprünge ausgebildet sind, die zur Befestigung innerhalb des Gehäuses dienen, so dass durch die Vorsprünge gleichzeitig eine Positionierung erreicht wird.

Eine besonders bevorzugte alternative Ausführungsform zeichnet sich dadurch aus, dass der Einsatz als eine im Wesentlichen rotationssymmetrische Düse ausgebildet ist, durch welche die Masse im Betrieb hindurch strömt, wobei die Düse so innerhalb des Gehäuses angeordnet ist, dass ihre Längsachse im Wesentlichen senkrecht zur Längsachse des Gehäuses und koaxial zu den beiden Rohrstutzen angeordnet ist. Die Düse ist jeweils an die besonderen Verhältnisse des Produktes angepasst und strömungstechnisch optimiert sowie sicher zwischen den Rohrstutzen innerhalb des Gehäuses positioniert.

Eine zweckmäßige Weiterbildung sieht vor, dass die Düse im eingesetzten Zustand an einem an dem Aufnahmeabschnitt der Aufnahmevorrichtung ausgebildeten Anschlag zur Anlage kommt, welcher in Strömungsrichtung stromabwärts von der Düse angeordnet ist. Mit einem so angeordneten Anschlag kann die Düse von einer Seite eingeführt und sicher an dem Anschlag positioniert werden, wobei im Betrieb die Strömung für eine Art Vorspannung in Richtung auf den Anschlag sorgt, so dass die Düse zuverlässig positioniert ist.

Die Erfindung löst die Aufgabe ferner gemäß eines weiteren Aspektes mit einer Füllvorrichtung (Füllmaschine), die mit einer zuvor erläuterten Bearbeitungsvorrichtung kooperiert. Hinsichtlich der mit einer derartigen Füllvorrichtung erfindungsgemäß erzielbaren Vorteile wird auf die obigen Beschreibungen Bezug genommen. Besonders bevorzug ist es, eine solche Füllvorrichtung mit einer Bearbeitungsvorrichtung zu koppeln, die eine einfach einsetzbare Düse aufweist, die so ausgestaltet ist, dass Gaseinschlüsse innerhalb von Wurstbrät oder anderen pastösen Lebensmittelmassen verteilt werden innerhalb des Bräts, also eine Art Homogenisierung mittels einer einfachen Strömungs-Düse erreicht wird.

Gemäß einer Weiterbildlung der Füllvorrichtung wird vorgeschlagen, dass. das Füllrohr der Füllmaschine mit einem Rohrstutzen der Bearbeitungsvorrichtung gekoppelt ist und dass ein den Auslass aufweisender Rohrstutzen der Bearbeitungsvorrichtung mit einem weiteren Vorsatzgerät, wie beispielsweise einem Clipper, einem Füllstromteiler oder dergleichen, gekoppelt ist.

Die Erfindung ist nachstehend anhand eines bevorzugten Ausführungsbeispiels einer Füllvorrichtung (Füllmaschine) und einer Bearbeitungsvorrichtung mit einer einsetzbaren Düse unter Bezugnahme auf die Zeichnungen beschrieben. Es zeigen:
Fig. 1 eine Füllmaschine mit gekoppelter Bearbeitungsvorrichtung und nachgeschaltetem Vorsatzgerät in einer Seitenansicht;
Fig. 2 eine erfindungsgemäße Bearbeitungsvorrichtung in einer perspektivischen Explosionsdarstellung und
Fig. 3 die Bearbeitungsvorrichtung gemäß den Fig. 1 und 2 in einer Längsschnittdarstellung.

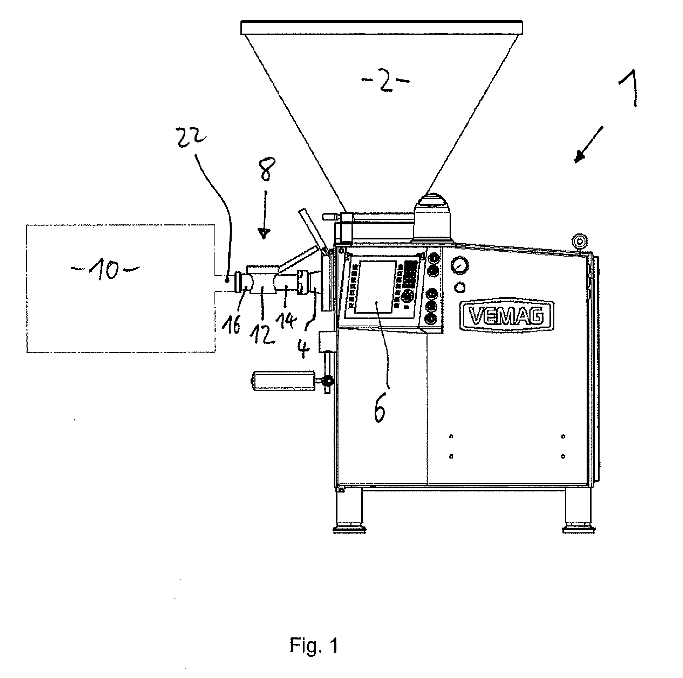

Die in Fig. 1 in einer Seitenansicht gezeigte Vorrichtung zum Abfüllen pastöser Massen, auch als Füllmaschine 1 bezeichnet, ist als Vakuum-Füllmaschine ausgebildet und dient zum Abfüllen von Wurst-Brät. Sie weist unter anderem einen trichterförmigen Vorratsbehälter 2 zum Aufnehmen und Speichern des Bräts oder anderer pastöser Masse wie Teig auf. Eine nicht gezeigte Füllpumpe fördert die pastöse Masse in ein Füllrohr 4 oder Füllrohrhalter 4 zum Abgeben der Masse aus der Füllmaschine 1. Das Füllrohr 4 weist an seinem freien Ende ein Außengewinde auf. Mittels einer Steuerung und Bedienfeld 6 lässt sich die Füllmaschine 1 steuern.

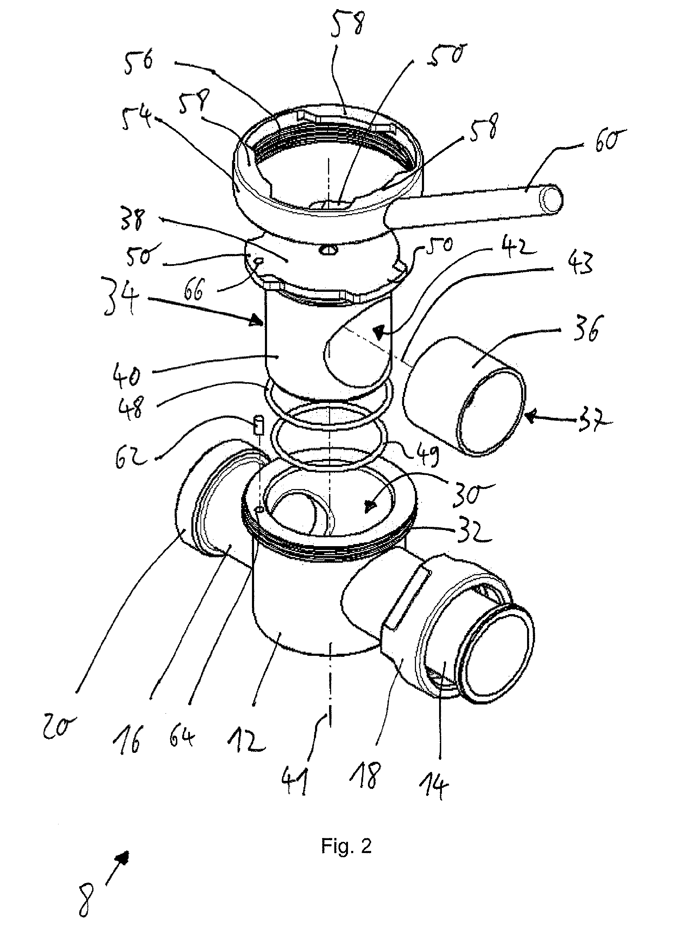

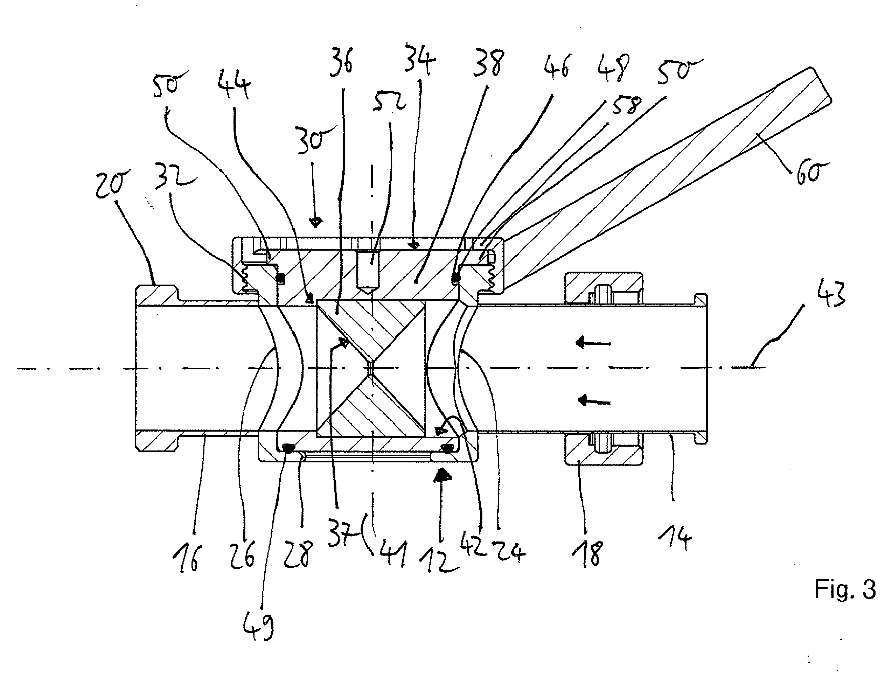

Eine Vorrichtung 8 zum Bearbeiten der pastösen Masse ist im Ausführungsbeispiel an die Füllmaschine 1 gekoppelt, sie könnte aber auch an eine andere Pumpe zum Fördern einer pastösen Lebensmittel-Masse gekoppelt sein oder mit einer Leitung, durch die pastöse Masse hindurch förderbar ist, verbunden sein. Die Bearbeitungsvorrichtung 8, auch in den Fig. 2 und 3 gezeigt, dient im Allgemeinen zum Bearbeiten der durch sie hindurchströmenden Masse. Speziell im Ausführungsbeispiel dient sie zum feineren Verteilen von Gaseinschlüssen, insbesondere Lufteinschüssen innerhalb des Bräts mit Hilfe von einsetzbaren Düsen, die unten näher beschrieben ist. Sie könnte aber auch andere Bearbeitungen des Bräts mittels eines Einsatzes vornehmen, z.B. eine Vermischung.

In Flussrichtung der Masse ist der Bearbeitungsvorrichtung 8 ein so genanntes Vorsatzgerät 10 nachgeschaltet, bei dem es sich im Ausführungsbeispiel um einen so genannten Clipper zum Abteilen und Verschließen einzelner Wurstportionen handelt. Es könnte auch alternativ als Füllstromteiler, Wolf oder dergleichen ausgebildet sein.

Die Bearbeitungsvorrichtung 8 weist ein Gehäuse 12 und zwei an diesem befestigte, gegenüberliegende Rohrstutzen 14, 16, auf, mit deren freien Enden eine Kopplung an die Füllmaschine 1 bzw. das Vorsatzgerät 10 so hergestellt ist, dass die Masse von der Füllmaschine 1 in die Bearbeitungsvorrichtung 8 und von dort in das Vorsatzgerät 10 gefördert werden kann. Die Kopplung ist durch Schraubverbindungen mit Hilfe von Überwurfmuttern und Außengewinden realisiert. Wie Fig. 1 und 2 zeigen, ist eine Überwurfmutter 18 an dem Rohrstutzen 14 zur Herstellung einer Verbindung mit einem Außengewinde an dem Füllrohr 4 ausgebildet. An dem freien Ende des Rohrstutzens 16 ist ein Außengewinde 20 vorgesehen, welches mit einem Rohrstutzen 22 (Fig. 1) des Vorsatzgerätes 10 mittels einer weiteren Überwurfmutter (nicht gezeigt) verbindbar ist.

Wie die Figuren 2 und 3 veranschaulichen, weist das zwischen den Rohrstutzen 14,16 angeordnete Gehäuse 12 an einem Ende des Rohrstutzens 14 einen Einlass 24 zum Einleiten der Masse in das Innere des Gehäuses 12 sowie einen mit einem Ende des Rohrstutzens 16 zusammenfallenden Auslass 26 zum Abgeben der Masse aus dem Gehäuse 12 auf. Das mit dem Rohrstutzen 14, 16 verschweißte oder verschraubte Gehäuse 12 hat im Wesentlichen die Form eines zylindrischen Rohres oder Rohrabschnittes, dessen unteres Ende mit einer Verschlussplatte 28 dauerhaft verschlossen ist. Gegenüber von der Verschlussplatte 28 weist das Gehäuse 12 eine mittels eines Verschlusses verschliessbare Öffnung 30 sowie außen ein Gewinde 32 auf.

Eine einstückige Aufnahmevorrichtung 34 dient zur Aufnahme eines Einsatzes 36, im Ausführungsbeispiel in Form einer Düse 37, welcher die hindurchströmende Masse beeinflusst. Die Aufnahmevorrichtung 34 hat einen oberen Verschlussabschnitt 38, der in dem in Figur 3 gezeigten, montierten Zustand die Öffnung 30 des Gehäuses 12 vollständig verschließt, sowie einen unteren Aufnahmeabschnitt 40, der die Düse 37 aufnimmt und im montierten eingesetzten Zustand weitgehend in das Innere des Gehäuses 12 hineinragt. Aufnahmevorrichtung 34 und der Einsatz 36 in Form der Düse 37 sind zusammen durch die Öffnung in - im wesentlichen radialer Richtung - so einsetzbar, dass die Düse 37 von der Masse durchströmt werden kann. Gleichzeitig ist der Einsatz 36 innerhalb des Gehäuses 12 positioniert.

Der im Wesentlichen zylindrische, rohrförmige Aufnahmeabschnitt 40 ist konzentrisch zur Längsachse 41 des Gehäuses 12 angeordnet. Die rotationssymmetrische Düse 37 ist mit ihrer Längsachse 43, die gleichzeitig die Längsachse der Rohrstutzen 14 und 16 ist, im Wesentlichen senkrecht zur Längsachse 41 des Gehäuses 12 und koaxial zu den beiden Rohrstutzen 14, 16 angeordnet. In dem Aufnahmeabschnitt 40 der Aufnahmevorrichtung 34 ist eine zylindrische Bohrung 42, in welche die außenzylindrische Düse 37 eingesetzt ist, ausgebildet, sowie ein Anschlag 44 in Form eines Absatzes, der dazu dient, dass die Düse 37 im eingesetzten Zustand dort zur Anlage kommt, wobei sie vollständig innerhalb der Bohrung 42 angeordnet ist. Die Düse 37 ist innen abschnittsweise sich konisch verjüngend und abschnittsweise sich konisch erweiternd in Flussrichtung der Masse ausgestaltelt. Die Wandung des Aufnahmeabschnitts weist an gegenüberliegenden Wandabschnitten jeweils eine Durchgangs-Bohrung 42 auf, so dass der Einsatz 36 einsetzbar und gleichzeitig positioniert ist.

Der Verschlussabschnitt 38 ist als im Wesentlichen kreisförmige Verschlussplatte ausgebildet, die die Öffnung 30 vollständig verschließt. In eine Umfangsnut 46 ist ein O-Ring 48 zur Abdichtung eingesetzt. Mittels eines O-Ringes 49 ist eine weitere Abdichtung realisiert. An dem äußeren Rand sind drei gleichmäßig beabstandete, außen leicht abgerundete Vorsprünge 50 ausgebildet, die im montierten Zustand an dem oberen Rand des Gehäuses 12 zur Anlage kommen. Mittig ist in der Verschlussplatte eine Sacklochbohrung 52 ausgebildet, die mit einem Innengewinde versehen ist, so dass ein Handhabungswerkzeug mit einem Außengewinde eingeschraubt werden kann, um die Aufnahmevorrichtung 34 zusammen mit dem Einsatz 38 einsetzen zu können durch Einführen in Richtung der Längsachse 41 bzw. entgegengesetzt herausziehen zu können.

Eine Überwurfmutter 54 ist auf das Außengewinde 32 an dem Gehäuse 12 so aufschraubbar, dass die Aufnahmevorrichtung 34 in montiertem Zustand gesichert ist in der in Figur 3 gezeigten Position. Die Überwurfmutter weist ein Innengewinde 56, eine Öffnung sowie nach innen ragende drei gleichmäßige beabstandete Vorsprünge 58 auf, die mit den Vorsprüngen 50 kooperieren. Ein radial und ein leicht nach oben winklig abstehender gerader zylindrischer Handgriff 60 dient zum manuellen Verdrehen der Überwurfmutter 54 in ihre angezogene Verschlussstellung oder eine Öffnungsstellung, in welcher die Vorsprünge 58 nicht fluchtend mit den Vorsprüngen 50 angeordnet sind. In dieser Position kann die gesamte Aufnahmevorrichtung 34 mit Einsatz 36 herausgezogen werden.

Wie Figur 2 zeigt, sorgt ein zylindrischer Stift 62 dafür, dass die eingesetzte Aufnahmevorrichtung 34 unverdrehbar bezüglich der Längsachse 41 positioniert ist. Der Stift 62 ist in eine zylindrische Ausnehmung 64 in dem Gehäuse 12 eingepresst. Im Bereich eines Vorsprungs 50 ist eine zylindrische Bohrung 66 ausgebildet, in die der Stift 62 eintauchen kann.

Die Betriebsweise der Füllmaschine 1 und Bearbeitungsvorrichtung 8 ist wie folgt:

Eine zu der zu verarbeitenden Masse und den Betriebsbedingungen passende Düse 37 wird zunächst in die Bohrung 42 eingeschoben, bis sie am Anschlag 44 zur Anlage kommt. Die gesamte Aufnahmevorrichtung mit eingesetzter Düse 37 wird dann durch die Öffnung 30 in das Gehäuse 12 vollständig eingeführt. Anschließend wird die Überwurfmutter 54 durch Drehen des Handgriffes 60 verdreht, so dass sie fest angezogen wird. Anschließend kann die Füllmaschine 1 eingeschaltet werden, so dass Brät in Richtung der Pfeile, Figur 3, durch den Rohrstutzen 14 und durch den inneren freien sich konisch verjüngenden und anschließend erweiternden Strömungsquerschnitt der Düse 37 hindurch gefördert wird, so dass es zu einer Verteilung etwaiger Lufteinschlüsse innerhalb des Bräts kommt. Weiter strömt das Brät durch den Rohrstutzen 16 in das Vorsatzgerät 10. Ändern sich die Eigenschaften des Bräts, etwa weil ein anderes Brät verarbeitet werden soll, wird die Überwurfmutter 54 gelöst, die Aufnahmevorrichtung 34 zusammen mit der Düse 37 herausgezogen, eine andere angepasste Düse 37 mit einem anderen Strömungsquerschnitt wird in die Bohrung 42 eingesetzt und anschließend die gesamte Aufnahmevorrichtung 34 wieder in das Gehäuse eingesetzt wie zuvor beschrieben.

## Patentansprüche

1. Vorrichtung zum Bearbeiten einer pastösen Masse wie Wurstbrät, insbesondere zur Kopplung mit einer Vorrichtung zum Abfüllen pastöser Masse,
mit einem Gehäuse (12), welches einen Einlass (24) zum Einleiten der Masse und einen Auslass (26) zum Abgeben der Masse aufweist, sowie
einem in das Gehäuse (12) einsetzbaren Einsatz (36), welcher dazu ausgebildet ist, durch das Gehäuse fließende Masse zu bearbeiten und/oder zu beeinflussen,
**dadurch gekennzeichnet, dass** in dem Gehäuse (12) zwischen Einlass (24) und Auslass (26) eine Öffnung (30) ausgebildet ist, durch welche der Einsatz (36) in das Gehäuse (12) einsetzbar bzw. herausnehmbar ist und dass die Öffnung (30) mittels eines Verschlusses verschließbar ist.

2. Vorrichtung nach Anspruch 1,
**gekennzeichnet durch** eine Aufnahmevorrichtung (34) zur Aufnahme des Einsatzes (36), welche zusammen mit dem Einsatz (36) **durch** die Öffnung (30) wenigstens teilweise in das Gehäuse (12) einsetzbar ist, um den Einsatz (36) innerhalb des Gehäuses (12) zu positionieren.

3. Vorrichtung nach Anspruch 2,
**dadurch gekennzeichnet, dass** die Aufnahmevorrichtung (34) einen im eingesetzten Zustand die Öffnung (30) verschließenden Verschlussabschnitt (38) und einen im eingesetzten Zustand in das Gehäuse (12) hineinragenden Aufnahmeabschnitt (40) aufweist, an welchem der Einsatz (36) befestigbar ist.

4. Vorrichtung nach Anspruch 2 oder 3,
**dadurch gekennzeichnet, dass** das Gehäuse (12) im Wesentlichen die Form eines zylindrischen Rohres aufweist, welches an seinem einen Ende dauerhaft verschlossen ist und an seinem anderen Ende die Öffnung (30) aufweist, und
dass der Aufnahmeabschnitt (40) der Aufnahmevorrichtung (34) im Wesentlichen rohrförmig ist und zwei gegenüberliegende Durchgangsbohrungen (42) aufweist, in welche der Einsatz (36) einsetzbar ist, und
dass der Verschlussabschnitt (38) der Aufnahmevorrichtung (34) als eine im Wesentlichen kreisförmige Verschlussplatte (38) ausgebildet ist.

5. Vorrichtung nach einem der vorstehenden Ansprüche,
**dadurch gekennzeichnet, dass** an dem Gehäuse (12) ein erster den Einlass (24) aufweisender Rohrstutzen (14) und ein zweiter den Auslass (26) aufweisender Rohrstutzen (16) angeordnet ist.

6. Vorrichtung nach einem der vorstehenden Ansprüche 2 bis 5,
**dadurch gekennzeichnet, dass** die Aufnahmevorrichtung (34) mittels eines Bajonettverschlusses oder Schraubverschlüssen an dem Gehäuse (12) befestigbar ist.

7. Vorrichtung nach einem der vorstehenden Ansprüche 2 bis 6,
**dadurch gekennzeichnet, dass** an der Verschlussplatte (38) der Aufnahmevorrichtung (34) mittig eine Sacklochbohrung (52) ausgebildet ist, in welche ein Handhabungswerkzeug zum Herausziehen bzw. Einführen der Aufnahmevorrichtung (34) formschlüssig einsetzbar ist.

8. Vorrichtung nach einem der vorstehenden Ansprüche 2 bis 7,
**dadurch gekennzeichnet, dass** im Randbereich des Verschlussabschnittes (38) Vorsprünge (50) ausgebildet sind, die zur Befestigung innerhalb des Gehäuses (12) dienen.

9. Vorrichtung nach einem der vorstehenden Ansprüche 5 bis 8,
**dadurch gekennzeichnet, dass** der Einsatz (36) als eine im Wesentlichen rotationssymmetrische Düse (37) ausgebildet ist, durch welche die Masse im Betrieb hindurch strömt, wobei die Düse (37) so innerhalb des Gehäuses (12) angeordnet ist, dass ihre Längsachse (43) im Wesentlichen senkrecht zur Längsachse (41) des Gehäuses (12) und koaxial zu den beiden Rohrstutzen (14, 16) angeordnet ist.

10. Vorrichtung nach Anspruch 9,
**dadurch gekennzeichnet, dass** die Düse (37) im eingesetzten Zustand an einem an dem Aufnahmeabschnitt (40) der Aufnahmevorrichtung (34) ausgebildeten Anschlag (44) zur Anlage kommt, welcher in Strömungsrichtung stromabwärts von der Düse (37) angeordnet ist.

11. Vorrichtung zum Abfüllen pastöser Massen, insbesondere Wurstbrät,
mit einem vorzugsweise trichterförmigen Vorratsbehälter (2) zum Aufnehmen der Masse, einer Füllpumpe zum Fördern der pastösen Masse und einem mit der Füllpumpe kommunizierenden Füllrohr (4) zum Abgeben der abzufüllenden Masse,
**gekennzeichnet durch** eine mit dem Füllrohr (4) kommunizierende Vorrichtung (8) zum Bearbeiten der pastösen Masse nach mindestens einem der vorstehenden Ansprüche.

12. Abfüllvorrichtung nach Anspruch 11,
**dadurch gekennzeichnet, dass** das Füllrohr (4) der Füllmaschine (1) mit einem Rohrstutzen (14) der Bearbeitungsvorrichtung (8) gekoppelt ist und dass ein den Auslass (26) aufweisender Rohrstutzen (16) der Bearbeitungsvorrichtung (8) mit einem weiteren Vorsatzgerät (10), wie beispielsweise einem Clipper, einem Füllstromteiler oder dergleichen, gekoppelt ist.
